# EUROPEAN PATENT APPLICATION

(11) **EP 1 003 019 A1**
(43) Date of publication of application: **24.05.2000**
(21) Application number: 99122796.8
(22) Date of filing: 16.11.1999
(51) Int. Cl.: G01F 11/26, G01F 11/22

(54) **Dosing device/multiple-use lock-operated stopper**

(30) Priority: 18.11.1998 AR 9805839 U
(71) Applicant: Marachli Levy, Alegre Maria, Buenes Aires (AR); Levi, Roberto Elias, Buenos Aires (AR); Strasberg, Ernesto Javier, Buenes Aires (AR)
(72) Inventor: Marachli Levy, Alegre Maria, Buenes Aires (AR); Levi, Roberto Elias, Buenos Aires (AR); Strasberg, Ernesto Javier, Buenes Aires (AR)
(74) Representative: Pereira da Cruz, Joao

(57) **Abstract**

The lock-operated dosing apparatus is a device which helps solve the problem of administering the exact amount of product to be used for a certain task; it is a general purpose device and it can be useful for household, medical or either industrial products such as cleaners, syrups, disinfectants, etc.

Dual-function single lock which closes the inlet at the same time as it opens an outlet, and vice versa. The same is operated from the outside by means of a knob sliding on a single runner, the lock having stops both at its opening and closing to avoid involuntary sliding; with two inner runners for the sliding of the lock (illustration number 3): outer capsule formed by two symmetrical and joint pieces, adjustable to any kind of threaded-mouth or fixed lid container; providing the anti-dripping feature of the container when being accidentally dropped; adjustable to any size and volume or geometrical body according to the amount to be dosed.

## Description

The lock-operated dosing apparatus is a device which helps solve the problem of administering the exact amount of product to be used for a certain task; it is a general purpose device and it can be useful for household, medical or either industrial products such as cleaners, syrups, disinfectants, etc.

The need not to depend upon additional elements in order to measure out the doses led me to develop this device the use of which is simple and one-handed since, at the same time, it serves as stopper and can be operated with one finger. It works as an anti-drip stopper of the container solving two problems all at once.

It also solves the problem of people unable to use both hands when operating it, such as when dosing liquid disinfectants or liquid medicines, without the need of additional measures.

In order to measure the exact amount of liquid to be used, the product uses a system of locks affixed to a hollow spherical body with a customized preset capacity. It is a hollow sphere (1) with an inlet (2) and a outlet (3) with one single lock (4) for opening and closing both openings, manually operated through a knob (5) which remains fixed by means of two stops (6), so that when the container is closed the lock is in the position indicated in illustration Number 1, thus preventing the fluid from coming out of the container; when you need to pour out a dose, the lock is operated by means of the knob by changing it to the position shown in illustration number 2, and the only amount of fluid being poured is that inside the body of the sphere (1), since such lock (4), when moved to the open position, closes the passage of the liquid out of the container and even if it remains in this position no further fluid is poured out because the outlet of the container is closed, thus achieving an additional advantage, the accidental spilling of liquid.

The amount of liquid to be poured is regulated by varying the sphere volume, thus, the higher the volume, the greater the amount of liquid to be poured or vice versa; the dose to be poured is perfectly measurable according to the volume of the sphere which contains it.

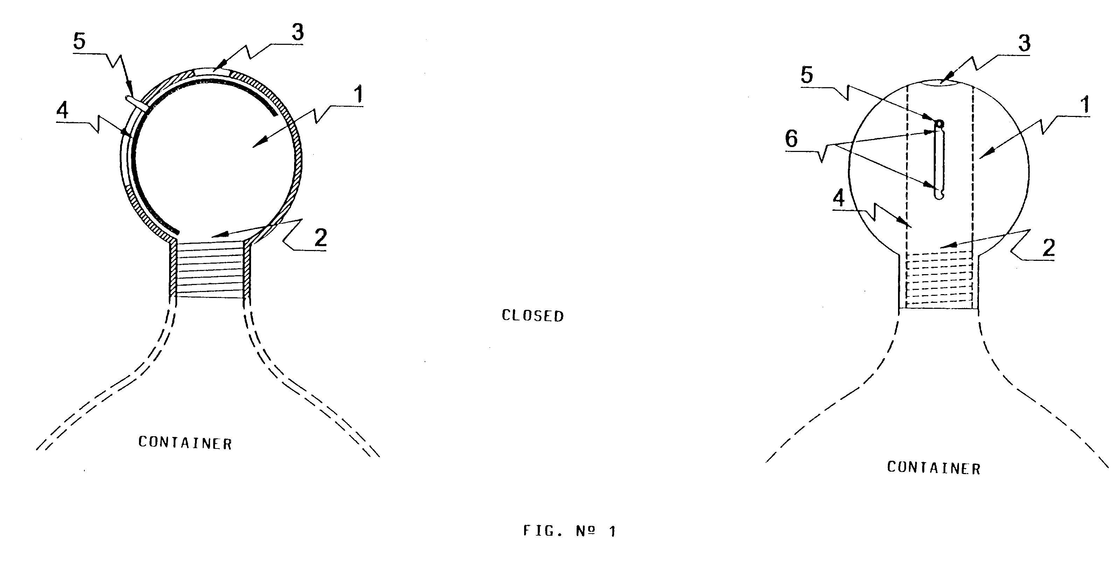

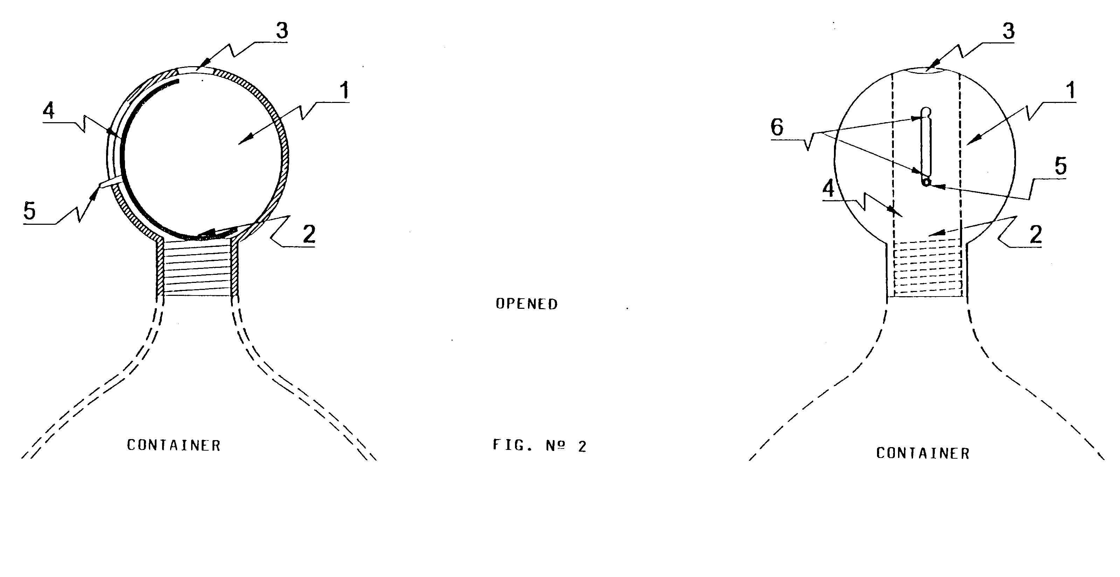

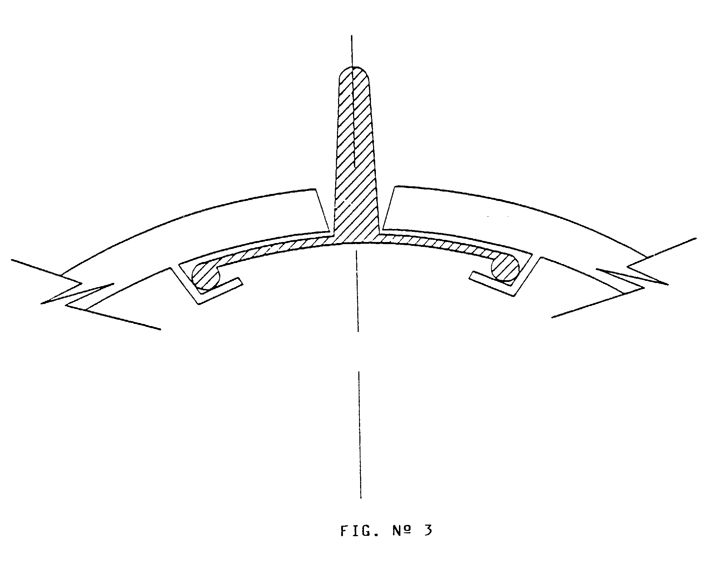

## Claims

1. Dual-function single lock which closes the inlet at the same time as it opens an outlet, and vice versa. The same is operated from the outside by means of a knob sliding on a single runner, the lock having stops both at its opening and closing to avoid involuntary sliding; with two inner runners for the sliding of the lock (illustration number 3): outer capsule formed by two symmetrical and joint pieces, adjustable to any kind of threaded-mouth or fixed lid container; providing the anti-dripping feature of the container when being accidentally dropped; adjustable to any size and volume or geometrical body according to the amount to be dosed.
